# EUROPEAN PATENT SPECIFICATION

(11) **EP 1 596 305 B1**
(45) Date of publication and mention of the grant of the patent: **11.07.2007**
(21) Application number: 04252720.0
(22) Date of filing: 11.05.2004
(51) Int. Cl.: G06F 13/24, G06F 15/167

(54) **Interrupt handling system**
Unterbrechungsbehandlungssystem
Système de traitement d'interruptions

(43) Date of publication of application: 16.11.2005
(73) Proprietor: STMicroelectronics Limited, Almondsbury, Bristol, BS32 4SQ (GB)
(72) Inventor: Whaley, Jeremy Philip, Yate, Bristol BS3 75XX (GB)
(74) Representative: Driver, Virginia Rozanne

(56) References cited:
- US-A1- 2002 194 409
- FUKAMI S: "PERFORMANCE EVALUATION METHOD FOR INTERPROCESSOR INTERRUPTS BY MESSAGE PASSING" MICROPROCESSING AND MICROPROGRAMMING, ELSEVIER SCIENCE PUBLISHERS, BV., AMSTERDAM, NL, vol. 23, no. 1 - 5INDEX, 1 March 1988 (1988-03-01), pages 185-190, XP000006271 ISSN: 0165-6074

## Description

The present invention relates to an interrupt handling system, particularly for processor generated interrupts.

Many integrated circuits now have integrated onto a single chip a complete system using multiple processors and other dedicated devices. A set top box is one example of a system on a chip. Where multiple processors form part of the system, they need to be able to communicate with one another and this is done by way of interprocessor interrupts. Currently, these are managed by a mailbox which receives a message from one processor that it wishes to interrupt another on-chip processor, and generates the interrupt accordingly. The mailbox includes enable/clear logic and optionally a status register for dealing with these interprocessor interrupts. The mailbox has a dedicated interface to a system bus to which the processors are connected and only deals with the interprocessor interrupts.

Reference is made to an article in "Microprocessing and Microprogramming 23 (1988) March, Nos. 105, entitled "Performance Evaluation Method for Interprocessor Interrupts by Message Passing", authored by Satoru Fukami, which describes a message-based interprocessor interrupt mechanism for a multi-microprocessor system.

Interprocessor interrupts may include, in addition to the interrupt itself, extra information, for example the location of data associated with the interrupt. The mailbox includes memory locations, for example in the form of registers, which allow this information to be held and accessed by the processor being interrupted.

Additionally, an on-chip system generally includes an interrupt level controller which handles other interrupts of the system, for example external interrupts which are received from the chip pads and internal interrupts which are received from the other on-chip active devices. An interrupt level controller has an array of inputs associated with the different sources of interrupts and includes enable/clear logic, routing logic and detection logic for detecting interrupts. An interrupt level controller may include status registers which hold the status of interrupts, but it does not include any way of handling additional information of a type which might be required with interprocessor interrupts. However, the interrupt level controller does allow the mapping of different interrupts to different processors, switching them on and off, clearing them and thus provides a great deal of flexibility.

Interrupt level controllers are known which have detection circuits associated with the respective interrupt inputs, the detection circuit being configurable to detect different types of interrupt, for example high level, low level, rising edge, falling edge, Edge or no edge (i.e. never detects).

It is an aim of the present invention to remove the need for a mailbox yet still allow flexible interprocessor interrupts to be implemented.

According to one aspect of the invention there is provided an integrated circuit comprising a plurality of processors and an interrupt handling system for processor generated interprocessor interrupts, the interrupt handling system comprising: at least one input arranged to provide a predetermined active level, characterised by: a detection circuit associated with the at least one input and selectively configurable to detect either the active level or an inactive level; control circuitry responsive to an interrupt request message from a processor to configure the detection circuit to detect the active level; and enable logic responsive to detection of the active level by the detection circuit to generate an interrupt.

There can be a set of such inputs, each associated with its own respective configurable detection circuit and a respective one of a set of on-chip processors.

The predetermined active level can be high or low and can be provided by tying an input pin to a high or low voltage accordingly.

The invention also provides an integrated circuit in which the processors are interconnected by a system bus and which has a shared memory resource connected to the system bus.

The invention also provides in another aspect a method of generating interprocessor interrupts comprising: generating from a first processor an interrupt request message, characterised by: responsive to said interrupt request message, configuring detection circuitry associated with at least one interrupt input which is arranged to provide a predetermined active level so that said detection circuitry is configured to detect the active level; generating an interrupt to a second processor responsive to the detection circuitry detecting the active level.

The invention further provides a consumer electronic device in the form of a Set Top Box or DVD Read and/or Write device utilising the above defined system or method.

The following described embodiment allows the mailbox functionality to be implemented with minor modifications to existing interrupt level controllers.

For a better understanding of the present invention and to show how the same may be carried into effect, reference will now be made by way of example to the accompanying drawing in which:
Figure 1 is a schematic diagram of a known interrupt handling system;
Figure 2 is a schematic diagram of an interrupt handling system in accordance with one embodiment of the invention; and
Figure 3 is a block diagram of a modified interrupt level controller.

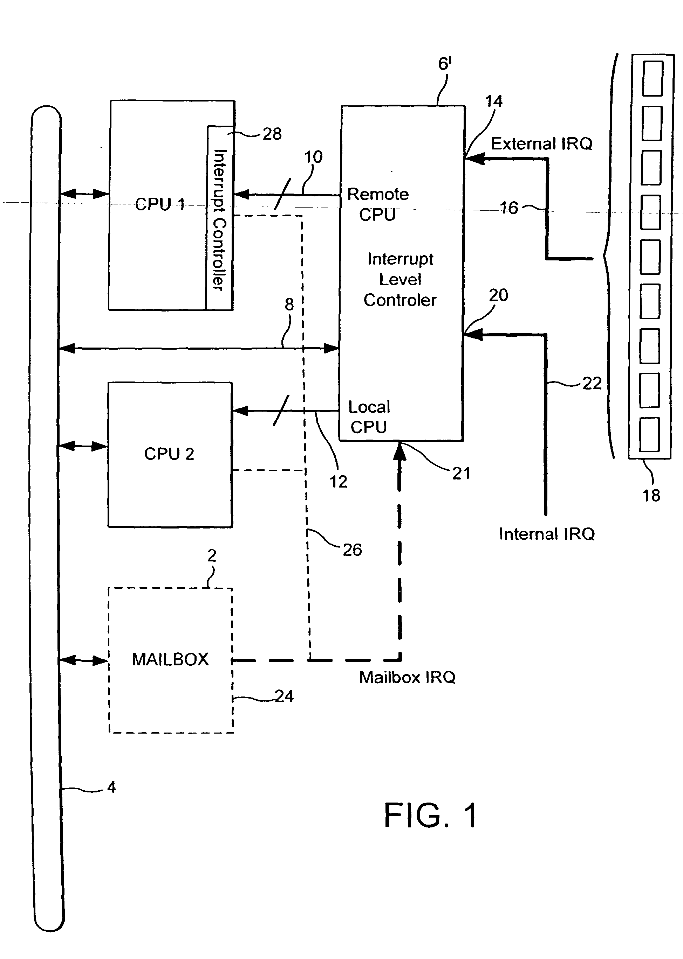

Figure 1 is a schematic block diagram of the relevant components of an integrated circuit with multiple processors to show the schema for handling interrupts. On-chip circuitry comprises a first processor CPU1, a second processor CPU2 and a mailbox 2 which are connected to a system bus 4. An interrupt level controller 6 is also connected to the system bus via communication path 8 which allows the interrupt level controller 6 to be configured as will be explained later. The interrupt level controller 6 is connected to the first processor CPU1 via a first interrupt path 10 for passing interrupts to that processor. The first processor CPU1 is sometimes referred to herein as the remote processor. The interrupt level controller 6 also has a second interrupt path 12 connected to the second processor CPU2, which is sometimes referred to herein as the local processor. The interrupt level controller 6 has a first set of inputs 14 for receiving external interrupt requests 16 which come, for example, from pads 18 of the integrated circuit, and a second set of inputs 20 for receiving internal interrupt requests 22 which come from other devices on the same chip. Optionally, the interrupt level controller has an input for receiving mailbox interrupt requests. The mailbox 2 has an output 24 which outputs interrupt requests either to the interrupt level controller via input 21 or to each of the first and second processors directly as indicated by the dotted path 26.

Although not shown in Figure 1 each input in the set of external request inputs 14 is associated with detection logic which is configurable to detect one of the different kinds of interrupts, that is high level, low level, rising edge, falling edge, any edge or no edge. The detection circuit at each input is independently configurable via the communication path 8 under the control of one of the processors CPU1, CPU2. The detection circuits are configured, for example, at the start of each application so that an interrupt arriving at any particular input is detected in the proper manner. The interrupt level controller 6 also includes enable/clear logic and routing logic which will be described in more detail later in the context of an embodiment of the invention.

Each processor is equipped with an interrupt controller, which is shown by reference numeral 28 for the first processor CPU1. A similar interrupt controller is present in the second processor CPU2 although it is not shown in Figure 1. These interrupt controllers handle interrupts in a known manner.

When one of the processors CPU1, CPU2 wishes to dispatch an interrupt to the other processor, it addresses a message to the mailbox 2 and the message is transmitted via the system bus 4. The message can include additional information such as data or a memory address associated with the interrupt. The interrupt level controller reads an interrupt request on input 21 from the mailbox 2 and if enabled and routed, generates an interrupt along path 10, 12 to the appropriate processor CPU1, CPU2. The mailbox 2 contains a status register which can be read by the processor being interrupted to determine the status of the interrupt, i.e. whether it is still pending or whether it is cleared. Thus, if, for example, the second processor CPU2 sends a message to the mailbox 2 to cause an interrupt to be generated to the first processor CPU1, the interrupt controller 28 reads the interrupt request and routes the interrupt over path 10 to the first processor CPU1. The first processor CPU1 then reads the mailbox 2 or the interrupt level controller 6 to clear the interrupt request when it has been dealt with.

The mailbox 2 optionally includes memory for holding the additional information which can be sent with the interrupt request message. This additional information can be accessed by the interrupted processor over the system bus 4.

As has been explained earlier, it would be desirable to have an interrupt handling system which avoids the need for a separate mailbox.

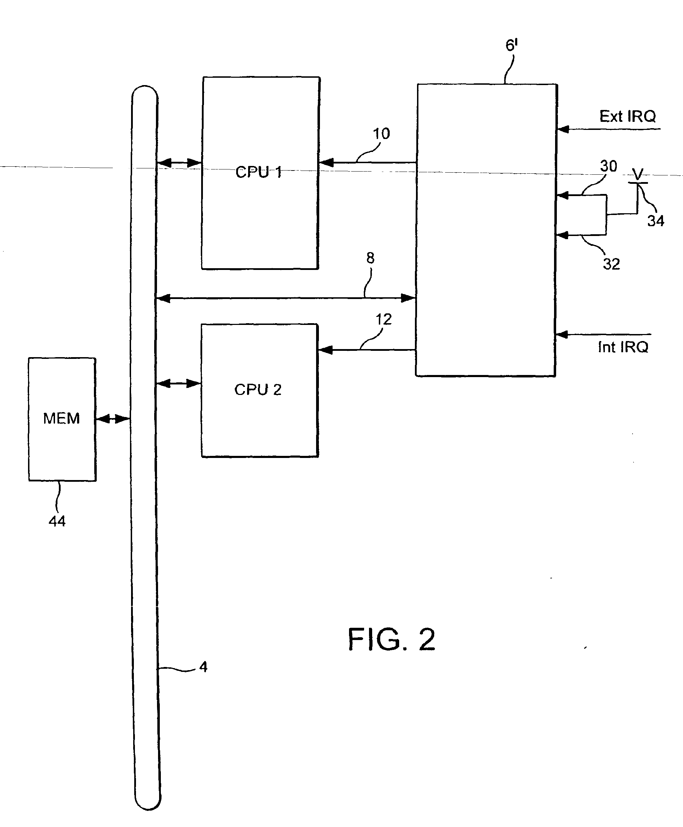

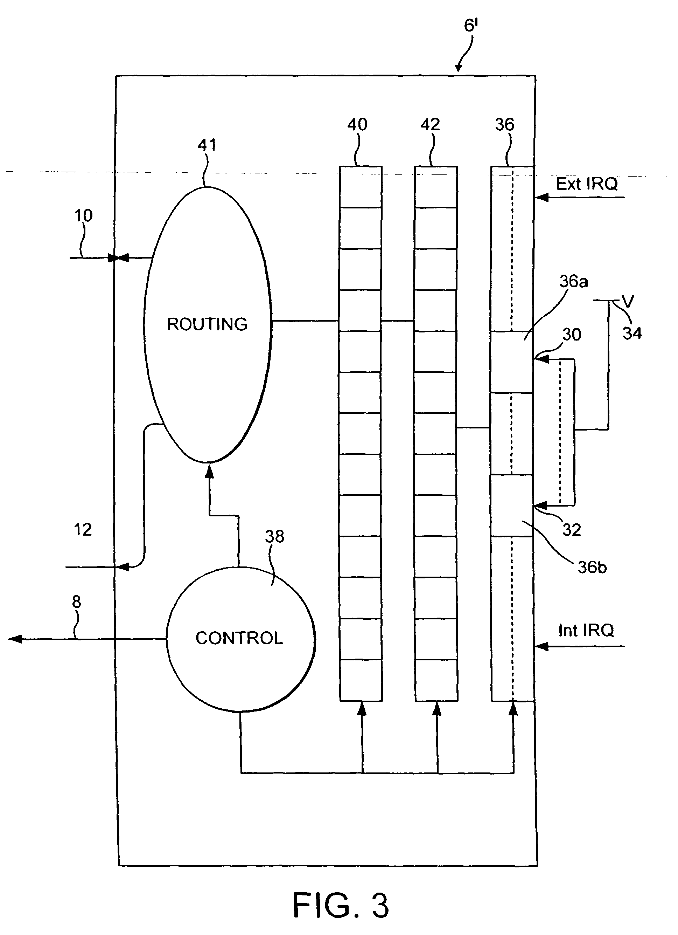

Figure 2 illustrates a schematic block diagram in which the processors can generate interrupts for each other without the use of a mailbox. In Figure 2, like numerals denote like parts as in Figure 1. The interrupt level controller is denoted 6' to distinguish it from the interrupt level controller 6 of Figure 1, though the functionality is the same. The interrupt level controller 6' includes a set of additional inputs, two of which 30, 32 are shown in Figure 2. The difference lies in the way these inputs are handled. While only two additional inputs are shown, there is at least one separate additional input for each processor in the system. There might, for example, be more than one additional input associated with each processor to indicate interrupts of different priority levels. The additional inputs 30, 32 are tied to a common active level. In this example input 30 is associated with CPU1 and input 32 with CPU2. In the present description, the active level is considered to be high, but it will be appreciated that the logic could be reversed. As shown in more detail in Figure 3, the interrupt level controller 6' includes detect logic 36 which has detect circuits associated with the inputs and including circuits 36a, 36b for each of the additional inputs 30, 32. The interrupt level controller 6' includes control logic 38 which configures the detect circuits 36 under the control of one of the processors CPU1, CPU2 via the communication path 8. The interrupt level controller 6' also includes enable/clear registers 40, routing logic 41 and a set of status registers 42, one associated with each input. The system additionally includes shared memory 44 connected to the system bus 4.

The system operates as follows to deal with interprocessor interrupts. At set-up, for example at the commencement of a new application to be executed by the system, the detection circuits 36 are each configured to detect the kind of interrupt expected at their associated input, as already described with reference to Figure 1. In the case of the embodiment of Figure 2, the detection circuits 36a, 36b associated with each of the additional inputs 30, 32 are set to detect a zero or low level. That is, in normal operation no interrupt will be detected by the detection circuits 36a, 36b associated with the additional inputs. When one of the processors CPU1, CPU2 wishes to generate an interrupt to the other processor, it first generates a message which is transmitted along communication path 8 to the control logic 38 of the interrupt level controller 6' which reconfigures the detection circuit associated with the input for the processor which is to be interrupted. Say, for example, in the case of the first processor CPU1 wishing to generate an interrupt to the second processor CPU2, a message is sent by the path 8 to the control logic 38 to reconfigure the detection circuit 36b so that it now detects a one (or high), rather than a zero. As that input is permanently tied to active high, it will immediately respond as though an interrupt has been received at that input. That is, the status register in the block 42 associated with that input is set to a status of interrupt pending, and the associated enable/clear register 40 is set to generate an interrupt along path 12 via the routing logic 41. The routing logic 41 maps interrupts received at the set of inputs 14, 20, 30, 32 to the appropriate processor based on the source of the interrupts. The routing logic is configured when the system is set up and the interrupts are first determined. The routing logic is also sometimes referred to as mapping logic. In this case, the routing logic 42 determines that the interrupt was detected at the additional input 32 which is an interrupt source intended for the second processor CPU2. Therefore, the interrupt is generated along path 12. If the interrupt was associated with additional information, the first processor accesses the shared memory 44 and stores that additional information in a predetermined location. When the interrupt is handled by the second processor CPU2, that processor accesses the shared memory 44 at the predetermined location to extract the additional information. Once the interrupt has been handled, a message is sent via path 8 to the interrupt level controller 6'. The message is handled by the control logic 38 to cause the enable/clear register 40 to clear the pending status of the interrupt in the status register and to reconfigure the detect circuit associated with the additional input 32 so that it once again is set to detect a zero (or low).

The shared memory 44 is a resource which is already available on the chip, and which in this embodiment has a set of predetermined locations associated with each of the processors CPU1, CPU2 for holding information about the interrupt, for example its reason and priority.

External and internal interrupt requests received at the inputs 14, 20 are handled in the normal way. It is not expected that interrupts arriving at these pins will have additional information to be shared.

The removal of the mailbox from the interrupt system saves chip area and reduces chip complexity for message paths. It has been appreciated that it is possible to use functionality which already exists in the interrupt level controller on the chip to provide the interprocessor interrupts.

## Claims

1. An integrated circuit comprising a plurality of processors (CPU1,CPU2) and an interrupt handling system for processor generated interprocessor interrupts, the interrupt handling system comprising:
at least one input (30,32) arranged to provide a predetermined active level, **characterised by**:
a detection circuit (36a,36b) associated with the at least one input and selectively configurable to detect either the active level or an inactive level;
control circuitry (38) responsive to an interrupt request message from a processor to configure the detection circuit to detect the active level; and
enable logic (40) responsive to detection of the active level by the detection circuit to generate an interrupt.

2. An integrated circuit according to claim 1, which comprises a set of inputs arranged to provide said predetermined active level, each input being associated with a respective processor (CPU1, CPU2) of the system.

3. An integrated circuit according to claim 2, wherein the interrupt request message identifies a processor to be interrupted, wherein the control circuitry is responsive to the interrupt request message to configure the detection circuit associated with the input for the processor to be interrupted to detect the active level.

4. An integrated circuit according to claim 1, which comprises at least one status register (42) associated with said at least one input for holding the status of the interrupt.

5. An integrated circuit according to claim 3, which comprises routing logic (41) for routing the interrupt to the identified processor.

6. An integrated circuit according to claim 1, wherein the plurality of processors (CPU1, CPU2)are interconnected via a system bus (4), and which further comprises a memory (44) connected to the system bus.

7. An integrated circuit according to claim 6, wherein the interrupt request message identifies a location in said memory where additional information concerning the interrupt is stored by the interrupt generating processor for access by the interrupted processor.

8. A method of generating interprocessor interrupts in an integrated circuit comprising a plurality of processors (CPU1, CPU2) comprising:
generating from a first one of said plurality of processors (CPU1) an interrupt request message, **characterised by**:
responsive to said interrupt request message, configuring detection circuitry (36) associated with at least one interrupt input (30,32) which is arranged to provide a predetermined active level so that said detection circuitry is configured to detect the active level;
generating an interrupt to a second one of said plurality of processors (CPU2) responsive to the detection circuitry detecting the active level.

9. An interrupt handling system as claimed in any of claims 1 to 5, embodied in a consumer electronic device.

10. An interrupt handling system as claimed in claim 9, wherein the consumer electronic device is a Set Top Box.

11. An interrupt handling system as claimed in claim 9, wherein the consumer electronic device is a DVD Read and/or Write device.

## Patentansprüche

1. Integrierte Schaltung, umfassend mehrere Prozessoren (CPU1, CPU2) und ein Unterbrechungs-Verarbeitungssystem für durch Prozessor erzeugte Zwischen-Prozessor-Unterbrechungen, wobei das Unterbrechungs-Verarbeitungssystem umfaßt:
wenigstens einen Eingang (30, 32), der eingerichtet ist, eine vorgegebene Aktivitätshöhe bereitzustellen, **gekennzeichnet durch**:
eine Erkennungsschaltung (36a, 36b), die mit dem wenigstens einen Eingang verbunden ist, und wahlweise eingerichtet werden kann entweder eine Aktivitätshöhe oder eine Inaktivitätshöhe zu erkennen;
Steuerschaltung (38), die auf eine Unterbrechungs-Anfragenachricht von einem Prozessor anspricht, um die Erkennungsschaltung so einzurichten, daß sie die Aktivitätshöhe erkennt; und
eine Freigabelogik (40), die auf das Erkennen der Aktivitätshöhe **durch** die Erkennungsschaltung anspricht, um eine Unterbrechung zu erzeugen.

2. Integrierte Schaltung nach Anspruch 1, welche einen Satz von Eingängen umfaßt, die eingerichtet sind, die vorgegebene Aktivitätshöhe bereitzustellen, wobei jeder Eingang mit einem entsprechenden Prozessor (CPU1, CPU2) des Systems verbunden ist.

3. Integrierte Schaltung nach Anspruch 2, bei welcher die Unterbrechungs-Anfragenachricht einen Prozessor kennzeichnet, der unterbrochen werden soll, wobei die Steuerschaltung auf die Unterbrechungs-Anfragenachricht anspricht, um die Erkennungsschaltung einzurichten, die mit dem Eingang des Prozessors verbunden ist, der unterbrochen werden soll, um die Aktivitätshöhe zu erkennen.

4. Integrierte Schaltung nach Anspruch 1, welche wenigstens ein Statusregister (42) umfaßt, das mit dem wenigstens einen Eingang zum Halten des Status der Unterbrechung verbunden ist.

5. Integrierte Schaltung nach Anspruch 3, welche wenigstens eine Leitlogik (41) umfaßt, zur Leitung der Unterbrechung an den **gekennzeichnet**en Prozessor.

6. Integrierte Schaltung nach Anspruch 1, bei welcher die mehreren Prozessoren (CPU1, CPU2) miteinander über einen Systembus (4) verbunden sind, und welche zusätzlich einen Speicher (44) aufweist, der mit dem Systembus verbunden ist.

7. Integrierte Schaltung nach Anspruch 6, bei welcher die Unterbrechungs-Anfragenachricht einen Ort in dem Speicher kennzeichnet, an dem zusätzlich die Unterbrechung betreffende Information durch den die Unterbrechung erzeugenden Prozessor gespeichert wird für einen Zugriff durch den unterbrochenen Prozessor.

8. Verfahren zum Erzeugen von Zwischen-Prozessor-Unterbrechungen in einer integrierten Schaltung, die mehrere Prozessoren (CPU1, CPU2) aufweist, umfassend:
Erzeugen einer Unterbrechungs-Anfragenachricht von einem ersten von den mehreren Prozessoren (CPU1), **gekennzeichnet durch**:
Ansprechen auf die Unterbrechungs-Anfragenachricht, Einrichten einer Erkennungsschaltung (36), die mit wenigstens einem Unterbrechungseingang (30, 32) verbunden ist, welcher eingerichtet ist eine vorgegebene Aktivitätshöhe bereitzustellen, so daß die Erkennungsschaltung eingerichtet ist, die Aktivitätshöhe zu erkennen;
Erzeugen einer Unterbrechung an einem zweiten von den mehreren Prozessoren (CPU2), der auf die Erkennungsschaltung anspricht, die die Aktivitätshöhe erkennt.

9. Unterbrechungs-Verarbeitungssystem wie in einem der Ansprüche 1 bis 5 beansprucht, enthalten in einer Verbraucher-Elektronik-Einrichtung.

10. Unterbrechungs-Verarbeitungssystem wie in Anspruch 9 beansprucht, bei welcher die Verbraucher-Elektronik-Einrichtung eine Set-Top-Box ist.

11. Unterbrechungs-Verarbeitungssystem wie in Anspruch 9 beansprucht, bei welchem die Verbraucher-Elektronik-Einrichtung eine DVD-Lese- und/oder Einrichtung ist.

## Revendications

1. Circuit intégré comprenant une pluralité de processeurs (CPU1, CPU2) et un système de traitement des interruptions pour des interruptions interprocesseur générées par processeur, le système de traitement des interruptions comprenant :
au moins une entrée (30, 32) agencée pour produire un niveau actif prédéterminé, **caractérisé par** :
un circuit de détection (36a, 36b) associé à la ou aux entrées et pouvant être configuré de façon sélective pour détecter soit le niveau actif, soit un niveau inactif ;
un ensemble de circuits de commande (38) réagissant à un message de demande d'interruption en provenance d'un processeur en configurant le circuit de détection pour détecter le niveau actif ; et
une logique de validation (40) réagissant à la détection du niveau actif par le circuit de détection en générant une interruption.

2. Circuit intégré selon la revendication 1, qui comprend un ensemble d'entrées agencé pour produire ledit niveau actif prédéterminé, chaque entrée étant associée à un processeur respectif (CPU1, CPU2) du système.

3. Circuit intégré selon la revendication 2, dans lequel le message de demande d'interruption identifie un processeur à interrompre, dans lequel l'ensemble de circuits de commande réagit au message de demande d'interruption en configurant le circuit de détection associé à l'entrée correspondant au processeur à interrompre pour détecter le niveau actif.

4. Circuit intégré selon la revendication 1, qui comprend au moins un registre d'état (42) associé à ladite ou auxdites entrées pour maintenir l'état de l'interruption.

5. Circuit intégré selon la revendication 3, qui comprend une logique d'acheminement (41) servant à acheminer l'interruption vers le processeur identifié.

6. Circuit intégré selon la revendication 1, dans lequel la pluralité de processeurs (CPU1, CPU2) est interconnectée par l'intermédiaire d'un bus système (4), et qui comprend en outre une mémoire (44) connectée au bus système.

7. Circuit intégré selon la revendication 6, dans lequel le message de demande d'interruption identifie une position dans ladite mémoire où des informations supplémentaires concernant l'interruption sont stockées par le processeur générant les interruptions pour accès par le processeur interrompu.

8. Procédé de génération des interruptions interprocesseur dans un circuit intégré comprenant une pluralité de processeurs (CPU1, CPU2), comprenant :
la génération à partir d'un premier de ladite pluralité de processeurs (CPU1) d'un message de demande d'interruption, **caractérisé par** :
en réponse audit message de demande d'interruption, la configuration de l'ensemble de circuits de détection (36) associé à ladite ou auxdites entrées d'interruption (30, 32) qui sont agencées pour produire un niveau actif prédéterminé afin que ledit ensemble de circuits de détection soit configuré pour détecter le niveau actif ;
la génération d'une interruption pour un second de ladite pluralité de processeurs (CPU2) en réponse à la détection du niveau actif par l'ensemble de circuits de détection.

9. Système de traitement des interruptions selon l'une quelconque des revendications 1 à 5, mis en oeuvre dans un dispositif électronique grand public.

10. Système de traitement des interruptions selon la revendication 9, dans lequel le dispositif électronique grand public est un boîtier décodeur.

11. Système de traitement des interruptions selon la revendication 9, dans lequel le dispositif électronique grand public est un lecteur et/ou graveur de DVD.
